# EUROPEAN PATENT SPECIFICATION

(11) **EP 1 983 216 B1**
(45) Date of publication and mention of the grant of the patent: **19.05.2010**
(21) Application number: 08152155.1
(22) Date of filing: 29.02.2008
(51) Int. Cl.: F16F 15/32

(54) **Wheel balance weight**
Auswuchtgewicht
Masselotte d'équilibrage

(30) Priority: 19.04.2007 JP 2007110614
(43) Date of publication of application: 22.10.2008
(73) Proprietor: Taiho Kogyo Co., Ltd, Toyota-shi, Aichi 471-8502 (JP); TOHO KOGYO CO.,LTD., Toyota-shi Aichi 444-3200 (JP)
(72) Inventor: Sugayauchi, Tatsuhiko, Toyota-shi Aichi 471-8502 (JP); Asano, Masayuki, Toyota-shi Aichi 471-8502 (JP); Yamaguchi, Yutaka, Toyota-shi Aichi 444-3200 (JP); Imaeda, Yasuhiro, Toyota-shi Aichi 444-3200 (JP)
(74) Representative: TBK-Patent

(56) References cited:
- EP-A- 1 355 084
- JP-A- 2001 065 639
- JP-A- 2001 108 020
- US-B1- 6 364 421

## Description

This invention is based on Japanese Patent Application No. 2007-110,614, filed on April 19, 2007.

### BACKGROUND OF THE INVENTION

### Field of the Invention

The present invention relates to a wheel balance weight. In particular, it relates to a wheel balance weight which demonstrates good assembly workability.

### Description of the Related Art

In a wheel-assembled state; namely: in a state where a tire of an automobile, or the like, is assembled with a wheel, there arises a drawback in that, as the imbalance enlarges in the peripheral direction around the rotary shaft of the wheel assembly as well as in the direction of the rotary shaft of the wheel assembly, the vibrations, noises, and the like, generate when driving a vehicle. The vibrations, noises, and so on, result from the imbalance in the wheel. In order to cancel the imbalance, the wheel is assembled with a wheel balance weight.

Document EP 1 355 084 A discloses a wheel balance weight including a weight and an installation member. The weight is composed of at least one member selected from the group consisting of zinc and a zinc-based alloy, is formed as a substantially strip shape having a substantially uniform thickness, and has opposite surfaces and at least a groove. The groove is formed in at least one of the opposite surfaces of the weight, and crosses in the width-wise direction of the weight. The installation member is adapted for installing the weight to a rim in a wheel. Since the weight is composed of zinc or a zinc-based alloy, environments are inhibited from being polluted when the wheel balance weight is abolished. Moreover, it is possible to manufacture the wheel balance weight at reduced costs and install it to wheels with ease.

Moreover, another conventional wheel balance weights, whose weight is made of a plurality of weight constituent pieces, have been available. United States Patent Gazette No. 6,364,421 and Japanese Unexamined Patent Publication (KOKAI) Gazette No. 2001-12,557, for instance, discloses such a conventional wheel balance weight, respectively. Likewise, the conventional wheel balance weights are assembled with a wheel by bonding the weight constituent pieces to the wheel.

Prior to the assembly with a wheel, the conventional wheel balance weights are provided with a release coated paper. The release coated paper covers the adhesive tape' s adhesive surface to be bonded to a wheel. Thus, before the assembly with a wheel, the release coated paper protects the adhesive tape's adhesive surface. Upon assembling them with a wheel, the release coated paper is removed from the adhesive tape to expose the adhesive surface, and then the weight is bonded to a wheel by way of the adhesive tape.

The conventional wheel balance weights have been provided with the release coated paper one of whose opposite widthwise ends protrudes beyond one of the widthwise opposite ends of the weight so as to enable an assembly worker or device to pinch the release coated paper with ease upon removing the release coated paper from the weight. In short, in the conventional wheel balance weights, only the release coated paper protrudes beyond one of the widthwise opposite ends of the weight.

The bonding of such a wheel balance weight to a wheel has been carried out as hereinafter described. First of all, an attaching position is determined based on imbalance in a wheel. Then, the wheel balance weight is bonded onto the wheel so as to make the attaching position coincide with the weight's center-of-gravity position.

Wheel balance weights have been bonded onto wheels using attaching devices. For example, Japanese Unexamined Patent Publication (KOKAI) Gazette No. 2001-108,020 discloses one of such attaching devices.

For example, in the conventional bonding apparatus disclosed in Japanese Unexamined Patent Publication (KOKAI) Gazette No. 2001-108,020, an iron wheel balance weight, which is to be bonded onto a wheel, is placed on a wheel-balance-weight receiving plate. Then, a rubber plate-shaped magnet attracts the wheel-balance-weight receiving plate to hold it in place. Thereafter, a jig descends into a wheel to position the wheel balance weight at a predetermined position with respect to the wheel. Finally, a cylinder is actuated to advance the wheel-balance-weight receiving plate toward the wheel. Thus, it is possible to bond the wheel balance weight at a specific predetermined position in the inner peripheral surface within the wheel.

However, conventional wheel balance weights might have been associated with workability problems. Specifically, it might have been difficult to make the alignment between a wheel balance weight' s center-of-gravity position, that is, its weight's center-of-gravity position, and the wheel balance weight's attaching position in a wheel, because the wheel balance weight' s center-of-gravity position, or its weight' s center-of-gravity position, is displayed in one of the opposite front and rear surfaces of the weight. More specifically, when the wheel balance weight's center-of-gravity position, or its weight' s center-of-gravity position, is displayed in the rear surface of the weight, it is difficult to visually recognize the center-of-gravity position, because an adhesive tape covers it. On the other hand, when the wheel balance weight's center-of-gravity position, or its weight's center-of-gravity position, is displayed in the front surface of the weight, the wheel-balance-weight receiving plate of the above-described conventional attaching device makes it difficult to visually recognize the wheel balance weight's center-of-gravity position, or the its weight' center-of-gravity position.

### SUMMARY OF THE INVENTION

The present invention has been developed in view of the aforementioned circumstances. It is therefore an object of the present invention to provide a wheel balance weight, which demonstrates good assembly workability upon attaching it to a wheel.

The present inventors have investigated conventional wheel balance weights over and over again in order to solve the aforementioned problems. As a result, they have arrived at completing a wheel balance weight according to the present invention.

Specifically, a wheel balance weight according to the present invention comprises:
a weight being formed as a substantially strip shape, being made of metal, and having opposite front and rear surfaces;
an adhesive seal being disposed integrally on the rear surface of the weight, and having an adhesive surface to be bonded onto an inner peripheral surface of a wheel's rim;
a release coated paper being disposed detachably on the adhesive surface of the adhesive seal; and
a protrusion being made of at least a part of the release coated paper, being disposed along a longitudinal direction of the weight, protruding parallel to a widthwise direction of the weight beyond one of opposite widthwise ends of the adhesive seal, being located at least around a position, which corresponds to the weight' s center of gravity, and being provided with a cut-off, which is placed at the position corresponding to the weight's center of gravity.

The present wheel balance weight comprises the protrusion. Moreover, not the front or rear surface of the weight, but the protrusion displays the weight's center-of-gravity position. Accordingly, it is possible to inhibit the weight' s center-of-gravity position from being less likely to be visually recognizable upon assembling the present wheel balance weight with a wheel. Consequently, the present wheel balance weight demonstrates improved workability upon assemblage.

### BRIEF DESCRIPTION OF THE DRAWINGS

A more complete appreciation of the present invention and many of its advantages will be readily obtained as the same becomes better understood by reference to the following detailed description when considered in connection with the accompanying drawings and detailed specification, all of which forms a part of the disclosure.

Fig. 1 is a perspective diagram for illustrating a wheel balance weight according to Example No. 1 of the present invention.

Fig. 2 is a diagram for illustrating a top view of the wheel balance weight according to Example No. 1.

Fig. 3 is a diagram for illustrating a cross-sectional view of the wheel balance weight according to Example No. 1.

Fig. 4 is a diagram for illustrating how the wheel balance weight according to Example No. 1 appears before providing a release coated paper with a cut-off.

Fig. 5 is a schematic diagram for illustrating how an attaching device's wheel-balance-weight supporter supports the wheel balance weight according to Example No. 1.

Fig. 6 is a diagram for illustrating a top view of a wheel balance weight according to Example No. 2 of the present invention.

Fig. 7 is a diagram for illustrating a top view of a wheel balance weight according to Example No. 3 of the present invention.

### DETAILED DESCRIPTION OF THE PREFERRED EMBODIMENTS

Having generally described the present invention, a further understanding can be obtained by reference to the specific preferred embodiments which are provided herein for the purpose of illustration only and not intended to limit the scope of the appended claims.

A wheel balance weight according to the present invention comprises a weight, an adhesive seal, a release coated paper, and a protrusion.

The weight is a component part, which is formed as a substantially strip shape and is made of metal. The weight has opposite front and rear surfaces, which are disposed back to back. When the present wheel balance weight is assembled with a wheel, the weight cancels imbalance in the wheel. Since the weight is formed as a substantially strip shape, it is possible to readily curb the weight like an arc in the longitudinal direction by applying a load to the weight per se in the thickness-wise direction. Accordingly, it is possible to deform (or curb) the weight in such a shape that goes along the curved shape of wheel. The weight, which is curbed so as to go along the curved shape of wheel, improves the adhesiveness between the present wheel balance weight (especially, the weight itself). Since the improved adhesiveness results in an increased contact area between a wheel and the weight, the present wheel balance weight is much less likely to come off from a wheel. The weight can preferably have a predetermined width, and can preferably be formed as an oblong or rectangular shape that extends perpendicularly to the widthwise direction. Moreover, the weight can preferably be formed as a substantially strip shape whose thickness is uniform virtually.

As far as the weight is made of metal, the quality of metallic material is not limited in particular. However, the weight can preferably be made of non-lead metal. Non-lead metals exert less environmental load even if they should be dumped into the natural world. As for a metal making the weight, it is possible to exemplify pure iron, and ferrous alloys whose major component is iron, for instance. The ferrous alloys can be steel, such as stainless alloys. Moreover, from the viewpoint of rust prevention, as for another material making the weight, it is possible to exemplify pure zinc, and zinc alloys whose major component is zinc.

The adhesive seal is a component part, which is disposed integrally on the rear surface of the weight, and which has an adhesive surface to be bonded onto an inner peripheral surface of a wheel's rim. That is, the adhesive seal adheres (or bonds) the weight onto a wheel. As far as being a component part that is capable of adhering the weight onto a wheel, the adhesive seal is not limited in particular. As for the adhesive seal, it is possible to exemplify double-sided adhesive tapes, which have an adhesive surface on the opposite surfaces, for instance.

Moreover, the adhesive seal can preferably comprise a substrate, which is made of material, such as foamed resin, exhibiting flexibility; and opposite front and rear surfaces, which are disposed on the opposite surfaces of the substrate, and which exhibit adhesiveness. When being provided with such a substrate, the adhesive seal per se exhibits flexibility. Accordingly, even if the weight's shape does not agree with a wheel' s shape completely, the adhesive seal deforms so as to absorb of itself the configurational difference between the weight and a wheel. Consequently, the adhesive seal comprising such a substrate enhances the adhesiveness between the weight and a wheel.

The release coated paper is a component part, which is disposed detachably on the adhesive surface of the adhesive seal. The release coated paper, which is disposed detachably on the adhesive surface of the adhesive seal, protects the adhesive surface of the adhesive seal prior to the assembly of the present wheel balance weight with a wheel. That is, upon assembling the present wheel balance weight with a wheel, an assembly worker or device peels off the release coated paper from the adhesive surface of the adhesive seal.

Moreover, at least a part of the release coated paper makes the protrusion. The protrusion is disposed along a longitudinal direction of the weight beyond one of opposite ends of the adhesive seal, and protrudes parallelly to a widthwise direction of the weight. That is, the released coated paper has a width, which is wider than that of the adhesive seal, partially. Accordingly, when the release coated paper covers the adhesive surface of the adhesive seal, at least one of the widthwise opposite ends of the release coated paper protrudes beyond one of the widthwise opposite ends of the adhesive seal. Consequently, an assembly worker or device can easily pinch the protruding widthwise opposite end of the release coated paper. As a result, an assembly worker or device can peel off the release coated paper from the adhesive seal with ease. Thus, the present wheel balance weight demonstrates improved workability upon assemblage.

In addition, the protrusion, which protrudes from one of the widthwise opposite ends of the release coated paper parallelly to a widthwise direction of the weight beyond one of the opposite ends of the adhesive seal, is located at least around a position, which corresponds to the weight' s center of gravity, and is provided with a cut-off, which is placed at the position corresponding to the weight's center of gravity. In other words, the present wheel balance weight comprises a cut-off, which is formed in the release coated paper, and the cut-off displays the weight' s center of gravity. Moreover, in the present wheel balance weight, the cut-off is visible when being viewed on one of the opposite widthwise sides of the weight, because it is located on one of the opposite widthwise sides of the weight. That is, if the weight's center-of-gravity position is displayed in the weight's front or rear surface, it is difficult to visually recognize the weight's center-of-gravity position upon assemblage. However, the cut-off of the present wheel balance weight makes it possible to visually recognize the weight's center-of-gravity position when being viewed on one of the opposite widthwise sides of the weight. As a result, the present wheel balance weight demonstrates improved workability upon assemblage. Note herein that the expression, "the protrusion is located at least around a position, which corresponds to the weight's center of gravity," does not necessarily mean that the center of the protrusion coincides with the weight's center of gravity. That is, it is allowable that the protrusion can be disposed over an area covering the weight's center of gravity. To put it differently, as far as the protrusion covers an area involving the weight' s center of gravity and the cut-off specifies the weight's center of gravity, the cut-off cannot necessarily be disposed at the center of the protrusion in the longitudinal direction.

In the present wheel balance weight, the shape of a cut-off, with which the protrusion is provided, is not limited in particular as far as it can display the weight's center-of-gravity position. For example, it is possible to exemplify such shapes as a substantially letter "V" shape, a substantially letter "U" shape or a concaved shape, which extends from the leading end of the protrusion toward one of the opposite widthwise ends of the weight.

In the present wheel balance weight, it is advisable that the protrusion can be located at least around a position, which corresponds to the weight' s center of gravity. To put it differently, it is allowable that the protrusion can even be disposed at the other locations. That is, the protrusion can preferably be formed over the entire length of the weight in the longitudinal direction of the weight. Accordingly, such a protrusion, which is formed over the entire length of the weight in the longitudinal direction of the weight, makes it possible to turn the release coated paper into a strip shape. Consequently, it is possible to reduce the costs required for manufacturing the release coated paper.

In the present wheel balance weight, the protrusion can preferably be disposed on one of the opposite widthwise ends of the weight at least. Moreover, the protrusion can further preferably be disposed on both of the opposite widthwise ends of the weight. The protrusions, which are disposed on both of the opposite widthwise ends of the weight, make the visual recognition of the weight's center-of-gravity position much easier upon assemblage.

Moreover, the protrusion can preferably protrude beyond one of the opposite widthwise ends of the adhesive seal at least. In addition, the protrusion can further preferably protrude beyond one of the opposite widthwise ends of the weight. The expression, "the protrusion protrudes," refer to such a state that the leading end of the protrusion is located more outward than one of the opposite widthwise ends of the weight is located in the protrusion direction (that is, in the direction parallel to the widthwise direction of the weight). The protrusion, which protrudes beyond one of the opposite widthwise ends of the weight, exhibits improved visibility. In other words, such a protrusion improves the visibility of the weight's center-of-gravity position, and thereby the present wheel balance weight demonstrates upgraded workability upon assemblage.

The protrusion can preferably be formed so as to protrude beyond one of the opposite ends of the weight by 0.5 mm or more. When the protrusion protrudes beyond one of the opposite ends of the weight by less 0.5 mm, the protruded magnitude is so less that it might be less likely to pinch such a protrusion.

The present wheel balance weight can preferably further comprise a center-of-gravity indicator for indicating the position of the weight' s center of gravity, the center-of-gravity indicator being disposed in the front surface of the weight. The center-of-gravity indicator makes it possible to carry out positioning the present wheel weight balance with respect to a wheel much more readily upon assemblage. Moreover, when the center-of-gravity indicator is further provided with an additional indicator for indicating the mass of the weight, such an additional indicator makes it possible to identify and then select a specific weight with a desirable mass from various options. Although the method of providing the weight with such a center-of-gravity indicator is not limited in particular, it is possible to exemplify laser processing, press processing and cut processing, for instance.

Note that, except that the present wheel balance weight comprises the release coated paper at least whose part makes the protrusion, it is allowable to configure the present wheel balance weight in the same manner as the conventional wheel balance weights.

Moreover, in the present wheel balance weight, the weight can preferably be provided with a groove, which extends in the widthwise direction of the strip-shaped weight. The weight being provided with such a groove enables an assembly worker or device to deform the weight in such a shape that conforms to the curved shape of a wheel' s inner peripheral surface with ease upon assembling the present wheel balance weight with a wheel. More specifically, the present wheel balance weight is assembled with a wheel in such a state that the longitudinal direction of the weight coincides with or is parallel to the peripheral direction of a wheel's inner peripheral surface. In other words, the weight is assembled with a wheel in such a state that it curves like an arc in the longitudinal direction. Accordingly, when a force is applied to the weight being provided with such a groove in order to curve the weight, the applied force concentrates on the groove so that the weight curves at the groove. Consequently, the groove makes it possible to turn the weight into a predetermined curved shape with a much less force.

In addition, the weight being provided with such a groove makes it possible to adjust the mass of the weight. Specifically, the weight has a thinner thickness partially at the groove. Accordingly, an assembly worker or device can cut the weight more easily at the grooved portion than at the other portions of the weight, that is, the portions thereof having an inherent not-thinned thickness. Moreover, when an assembly worker applies a load repetitively to the weight in such directions to open and close the groove, he or she can cut the weight by causing fracture at the groove. To put it differently, an assembly worker can adjust the mass of the weight manually without ever using any special jigs.

Moreover, the weight can preferably be provided with a plurality of such grooves. In addition, a plurality of such grooves can preferably be disposed at predetermined intervals so that the sections being held between the grooves have a predetermined mass, respectively. Note herein that the phrase, "sections being held between the grooves," refers to the sections of the strip-shaped weight that are held between the neighboring grooves, which are disposed one after another in the longitudinal direction of the strip-shaped weight. When the sections of the strip-shaped weight, which are held between the neighboring grooves, have a predetermined mass, it is possible to adjust the mass of the weight with ease.

Note that it does not matter at all whether the groove is formed in one of the front and rear surfaces of the weight, or whether the groove is formed in both of the front and rear surfaces of the weight. Moreover, there are no limitations on the groove's shape (or cross-sectional shape specifically) inparticular. For example, the groove can be formed as either one of the following shapes: substantially cross-sectionally letter "V" shapes, substantially cross-sectionally letter "U" shapes, and substantially cross-sectionally dented shapes.

Moreover, the weight can preferably be formed as an arc shape, which conforms to a wheel's inner peripheral surface. Since the present wheel balance weight is attached onto the inner peripheral surface of a wheel' s rim, the weight, which is formed as an arc shape conforming to the rim's inner peripheral surface, makes it possible to readily attach the present wheel balance weight onto a wheel. In this instance, the weight can preferably be provided with a plurality of grooves, and the respective sections of the weight, which are held between the neighboring grooves, have a rear surface that is formed as an arc shape, which conforms to the inner peripheral surface of a wheel. In other words, the sections of the weight, which are held between the neighboring grooves, can preferably have a rear surface, which is formed as a semi-cylindrical shape, respectively.

In addition, the weight can preferably be provided with an identification indicator on one of the front and rear surfaces. As for such an identification indicator, it is possible to exemplify the mass of the weight, for instance. The weight being provided with such an identification indicator enables an assembly worker or device to identify and then select the weight with a desirable mass from various options. Moreover, when such an identification indicator indicates the mass for each of the sections of the weight, which are held between the above-described neighboring grooves, it is possible for an assembly worker or device to cut a preform of the weight and then turn it into the weight having a desirable mass with ease. Although the method of providing the weight with such an identification indicator is not limited in particular, it is possible to exemplify laser processing, press processing and cut processing, for instance.

Moreover, not limited to the weight, the release coatedpaper, which makes the protrusion, too, can be provided with an identification indicator, in addition to the cut-off. As for such an identification indicator, it is likewise possible to exemplify the mass of the weight, for instance.

In the present wheel balance weight, at least one of the surfaces of the weight can preferably be subjected to a surface treatment. When at least one of the surfaces of the weight is subjected to a surface treatment, it is possible not only to make the appearance of the weight neat but also to inhibit the weight from rusting. As for such a surface treatment, it is possible to name surface treatments, which are performed onto the weight being made of ferrous metal. For example, such a surface treatment can be a zinc chromate treatment, a silver powder painting, chromium plating, and a baking zinc chromate composite film.

### EXAMPLES

The present wheel balance weight will be hereinafter described with reference to specific examples.

The following wheel balance weights were manufactured as examples of the present wheel balance weight.

(Example No. 1)

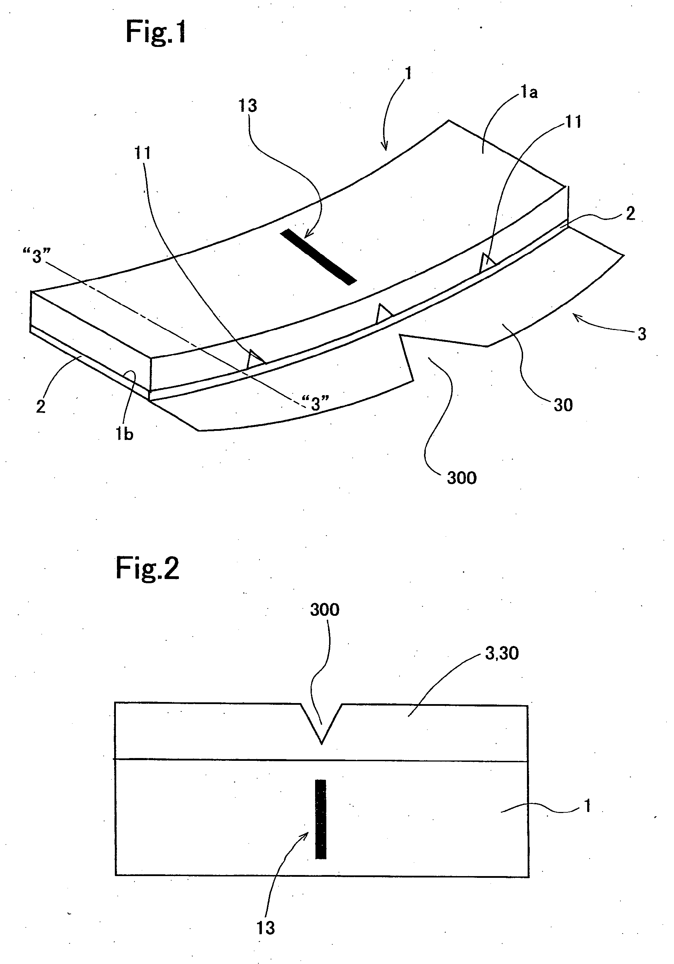

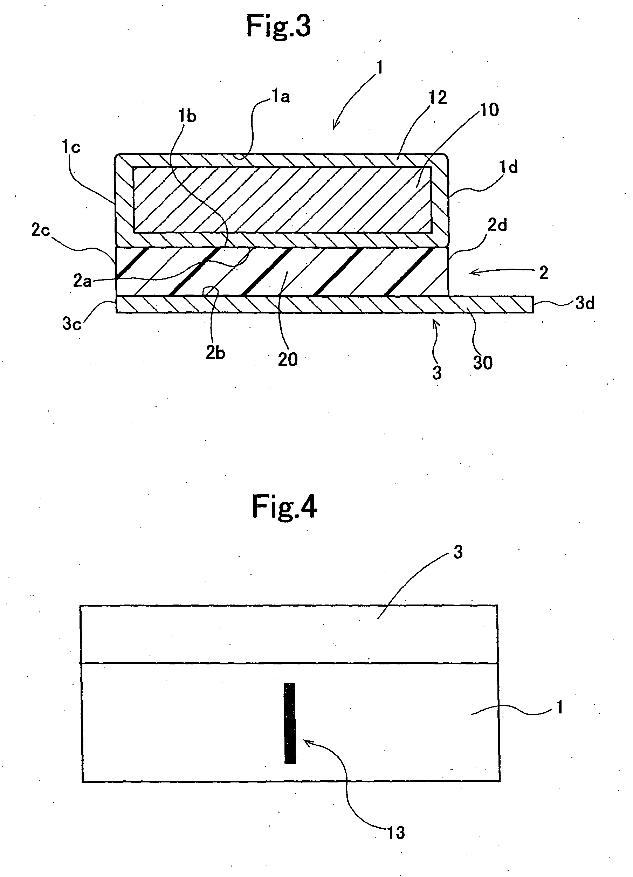

Figs. 1 through 3 illustrate a wheel balance weight according to Example No. 1 of the present invention. Specifically, Fig. 1 shows a perspective view of the wheel balance weight according to Example No. 1. Fig. 2 shows a top view of the wheel balance weight according to Example No. 1 when being viewed on a weight's front-surface side. Fig. 3 shows a cross-sectional view of the wheel balance weight according to Example No. 1 when being cut along the line "3"-"3" designated in Fig. 1.

A wheel balance weight according to Example No. 1 of the present invention comprises a weight 1, a double-sided adhesive tape 2, and a release coated paper 3.

The weight 1 comprises a substrate 10, and a baking zinc chromate composite film 12, which is formed on the surfaces of the substrate 10, as illustrated in Fig. 3. The substrate 10 is made by molding a strip-shaped iron plate. The strip-shaped iron plate has the following dimensions: a width of from 15 to 25 mm; a thickness of from 2 to 6 mm; and a length of from 5 to 200 mm. Moreover, the weight 1 is provided with grooves 11, which are formed in a rear surface 1b of the weight 1, that is, one of the opposite surfaces of the weight 1, as shown in Fig. 1. The grooves 11 are formed as a letter "V" shape. The grooves 11 have an opening width of from 0.5 to 5 mm, and a depth of from 1.9 to 5.9 mm. In addition, the weight 1 is curved as an arc in the longitudinal direction of the strip-shaped substrate 10. In other words, the weight 1 has a curved front surface 1a, and the curved rear surface 1b. In this instance, the sections of the weight 1, which are demarcated by the neighboring grooves 11, are curved as well like an arc.

Moreover, the weight 1 is further provided with a center-of-gravity indicator 13, which indicates the weight 1's center of gravity, on the front surface 1a, as illustrated in Fig. 1, for instance. Note that the center-of-gravity indicator 13 is formed by means of laser processing.

The double-sided adhesive tape 2 comprises a strip-shaped substrate 20, and opposite adhesive surfaces 2a and 2b, as illustrated in Fig. 3. The strip-shaped substrate 20 is made of foamed resin, which exhibits elasticity and flexibility. The adhesive surfaces 2a and 2b are provided on the substrate 20' s opposite surfaces, which are disposed back to back, respectively. Moreover, the strip-shaped double-sided adhesive tape 2 has the following dimensions: a width of from 9 to 25 mm; a thickness of from 0.5 to 1.6 mm; and a length of from 5 to 200 mm. In addition, the strip-shaped double-sided adhesive tape 2 is formed as the same shape as that of the weight 1. Note herein that the double-sided adhesive tape 2 comprises an ordinary double-side adhesive tape, which has been used also in a conventional wheel balance weight. Moreover, the double-side adhesive tape 2 is fastened on the weight 1 by adhering one of the opposite adhesive surfaces 2a and 2b, i. e. , the front adhesive surface 2a, onto the rear surface 1b of the weight 1, as shown in Fig. 3.

The release coated paper 3 covers the rear adhesive surface 2b of the double-sided adhesive tape 2 detachably. The release coated paper 3 is formed as a strip shape whose width is wider than that of the weight 1. Specifically, the release coated paper 3 is formed as a strip shape that has the following dimensions: a width of from 15 to 35 mm; a thickness of from 0.01 to 0.1 mm; and a length of from 5 to 200 mm. Note that the release coated paper 3 covers the rear adhesive surface 2b of the double-sided adhesive tape 2 detachably in the following manner: as illustrated in Fig. 3, the one of the opposite widthwise ends (i.e., the widthwise end 3c) coincides with one of the opposite widthwise ends of the weight 1 (i.e., the widthwise end 1c); and the widthwise end 3c coincides with one of the opposite widthwise ends of the double-sided adhesive tape 2 (i.e., the widthwise end 2c).

Moreover, as illustrated in Fig. 1, the release coated paper 3 comprises a protrusion 30. The protrusion 30 is disposed on the other widthwise end 3d of the release coated paper 3 so as to protrude beyond the other widthwise end 1d of the weight 1 and beyond the other widthwise end 2d of the double-sided adhesive tape 2 as shown in Fig. 3. The protrusion 30 is provided with a letter "V"-shaped cut-off 300. The letter "V"-shaped cut-off 300 is located at a position, which corresponds to the center-of-gravity indicator 13 of the weight 1, as shown in Figs. 1 and 2. Specifically, the letter "V"-shaped cut-off 300 is formed so that the leading end of the letter "V"-shape specifies a position, which corresponds to the center-of-gravity indicator 13 of the weight 1. Thus, in addition to the center-of-gravity indicator 13, the letter "V"-shaped cut-off 300 also indicates the weight 1' s the center-of-gravity position. Note that, at first, the wheel balance weight according to Example No. 1 of the present invention comprises the strip-shaped release coated paper 3, which is free from the letter "V"-shaped cut-off 300 and which covers the rear surface 2b of the double-sided adhesive tape 2 detachably. To put it differently, as illustrated in Fig. 4, the release coated paper 3, which has not been provided with the letter "V"-shaped cut-off 300, covers the rear surface 2b of the double-sided adhesive tape 2 detachably, and then the front surface 2b of the double-sided adhesive tape 2 is bonded onto the rear surface 1b of the weight 1. Thereafter, the forming position of the letter "V"-shaped cut-off 300 is determined based on the center-of-gravity indicator 13, which is formed in the weight 1. Finally, the letter "V"-shaped cut-off 300 is formed at the determined forming position by such a method as laser processing.

(Assembly of Wheel Balance Weight)

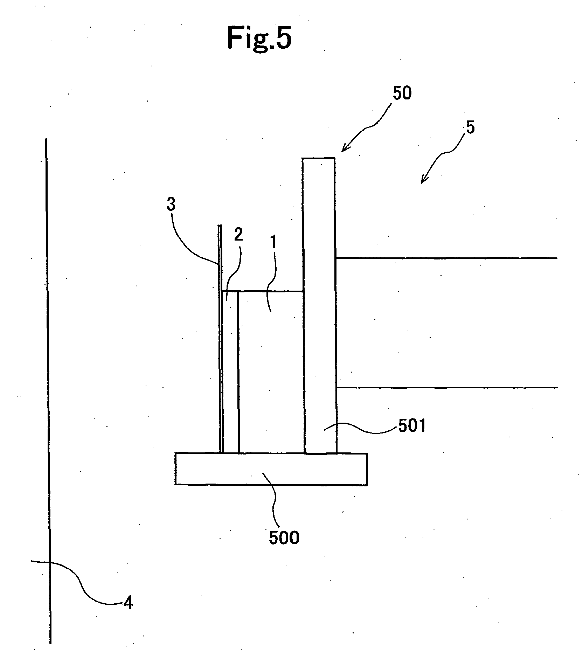

The wheel balance weight according to Example No. 1 of the present invention was actually assembled with a wheel in accordance with the following procedures. The wheel balance weight according to Example No. 1 was assembled with a wheel using a conventional attaching device 5 shown in Fig. 5. As illustrated in the drawing, the conventional attaching device 5 comprised a supporter 50 for supporting a wheel balance weight, and a not-shown actuator for moving the supporter 50 so as to press the wheel balance weight onto a wheel 4.

Prior to attaching the wheel balance weight according to Example No. 1 of the present invention onto the wheel 4, the wheel 4, to which a tire was installed, was subjected to a balance test. According to the test results, a required total mass of the wheel balance weight according to Example No. 1, and an attaching position (or the center-of-gravity position) of the wheel balance weight according to Example No. 1 onto the wheel 4 were determined. The wheel balance weight according to Example No. 1 was turned into an attachable actual wheel balance weight with a mass (hereinafter referred to as "cut-to-mass wheel balance weight"), mass which is equal to the thus determined required total mass, by cutting. Then, the weight 1 of the resultant cut-to-mass wheel balance weight according to Example No. 1 was provided with a marking, which specifies the central position of the cut-to-mass wheel balance weight according to Example No. 1 in the longitudinal direction (that is, in the same direction as the peripheral direction of the wheel 4).

Subsequently, the cut-to-mass wheel balance weight according to Example No. 1 of the present invention was placed on the supporter 50 of the attaching device 5 so that the protrusion 30 of the release coated paper 3 protruded upward. In this instance, as illustrated in Fig. 5, a side view of the attaching device 5, the supporter 5 supported the cut-to-mass wheel balance weight according to Example No. 1 so as to face the release coated paper 3 to the wheel 4. Note that, as shown in Fig. 5, the supporter 50 comprised a horizontal plate 500 and a retainer plate 501. The horizontal plate 500 stretched horizontally, and was disposed movably back and forth. The retainer plate 501 was disposed on the horizontal plate 500, and extended perpendicularly. The supporter 50 supported the cut-to-mass wheel balance weight according to Example No. 1 so that the front surface 1a of the weight 1 contacted with the retainer plate 501. As a result, when the supporter 50 supported the cut-to-mass wheel balance weight according to Example No. 1, the retainer 501 plate made the front surface 1a of the weight 1 invisible.

Under the above-described circumstances, the supporter 50 was fitted into the wheel 4. Note that, prior to the insertion, the supporter 50 was placed with respect to the wheel 4 so that the center-of-gravity position of the weight 1 of the cut-to-mass wheel balance weight according to Example No. 1 of the present invention faces to or is parallel to an attaching-position marking, with which the wheel 4 had been provided in advance, in the radial direction of the wheel 4. Moreover, the supporter 50 was then moved clockwise or counterclockwise minutely so as to make the cut-off 300 of the release coated paper 3's protrusion 30 coincide with the wheel 4' s attaching-position marking radially. Thus, the inserted supporter 50, that is, the cut-to-mass wheel balance weight according to Example No. 1, was positioned with respect to the wheel 4.

Then, the release coated paper 3 was peeled off from the weight 1, that is, from the double-sided adhesive tape 2 actually, to expose the rear surface of the cut-to-mass wheel balance weight according to Example No. 1 of the present invention, that is, the adhesive rear surface 2b of the double-sided adhesive tape 2 actually.

Finally, the not-shown actuator of the attaching device 5 was actuated so as to move the supporter 50 radially, and thereby the rear surface of the cut-to-mass wheel balance weight according to Example No. 1 of the present invention, that is, the adhesive rear surface 2b of the double-sided adhesive tape 2 actually, was pressed onto the inner peripheral surface of the wheel 4. In accordance with the above-described manufacturing procedures, the cut-to-mass wheel balance weight according to Example No. 1 could be bonded onto a predetermined position in the inner peripheral surface of the wheel 4 with good accuracy, or was assembled with the wheel 4 accurately.

During the attachment or assemblage, the cut-to-mass wheel balance weight according to Example No. 1 of the present invention was pressed onto the inner peripheral surface of the wheel 4 so that the weight 1 deformed at the grooves 11. Accordingly, it was possible to familiarize the weight 1 with the inner peripheral surface of the wheel 4' s rim or to break in the weight 1 to the inner peripheral surface of the wheel 4' s rim. Moreover, the cut-to-mass wheel balance weight according to Example No. 1 comprised the double-sided adhesive tape 2, which exhibited elasticity and flexibility. Consequently, the double-sided adhesive tape 2 absorbed the superficial irregularity on the rear surface 1b of the weight 1, irregularity which resulted from the deformed or curved weight 1. Therefore, the double-sided adhesive tape 2 bonded the weight 1 onto the wheel 4 with high adhesiveness. All in all, it was possible to assemble the cut-to-mass wheel balance weight according to Example No. 1 with the wheel 4 accurately.

Note that, when assembling the cut-to-mass wheel balance weight according to Example No. 1 of the present invention with the wheel 4, the cut-to-mass wheel balance weight according to Example No. 1 was supported by the supporter 50 of the attaching device 5. Even in such a state, however, it was possible to carry out the positioning of the weight 1 with respect to the wheel 4 readily while referring to the cut-off 300 with which the release coated paper 3's protrusion 300 was provided. As a result, the cut-to-mass wheel balance weight according to Example No. 1 demonstrated improved workability upon the assembly with the wheel 4.

(Example No. 2)

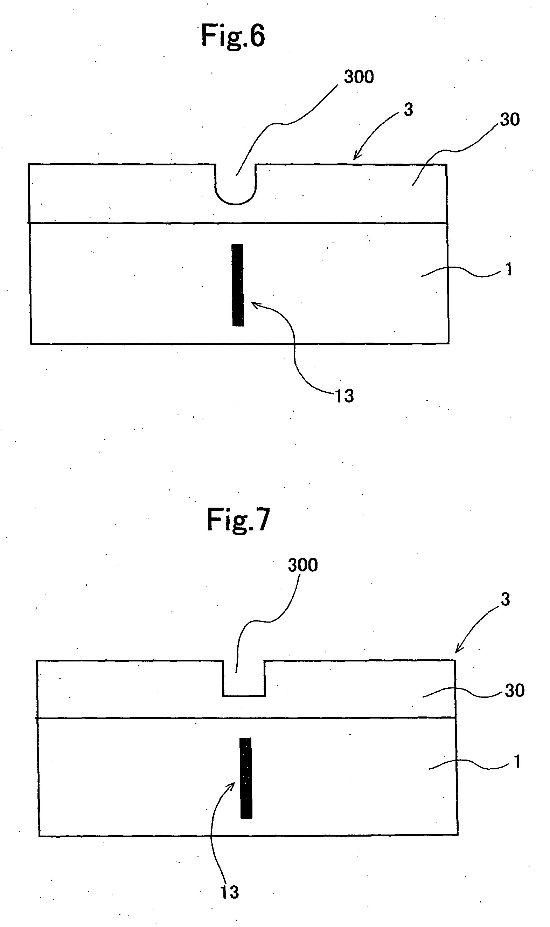

Fig. 6 illustrates a wheel balance weight according to Example No. 2 of the present invention.

Except that the wheel balance weight according to Example No. 2 of the present invention comprises the release coated paper 3 whose protrusion 30 is provided with a cut-off 300 being formed differently from that of the wheel balance weight according to Example No. 1, the wheel balance weight according to Example No. 2 comprises the same component elements as those of the wheel balance weight according to Example No. 1.

As illustrated in Fig. 6, the release coated paper 3's protrusion 30 is provided with a cut-off 300, which is formed as a letter "U" shape. The letter "U"-shaped cut-off 300 extends inwardly from the outer opposite side of the protrusion 30 to the inner opposite side thereof, that is, from the outside toward the weight 1.

The wheel balance weight according to Example No. 2 of the present invention also demonstrated the advantages, not only the handling readiness prior to the assemblage but also the improved workability upon the assemblage.

(Example No. 3)

Fig. 7 illustrates a wheel balance weight according to Example No. 3 of the present invention.

Except that the wheel balance weight according to Example No. 3 of the present invention comprises the release coated paper 3 whose protrusion 30 is provided with a cut-off 300 being formed differently from that of the wheel balance weight according to Example No. 1, the wheel balance weight according to Example No. 3 comprises the same component elements as those of the wheel balance weight according to Example No. 1.

As illustrated in Fig. 7, the release coated paper 3's protrusion 30 is provided with a cut-off 300, which is formed as a dented shape. The dented cut-off 300 extends inwardly from the outer opposite side of the protrusion 30 to the inner opposite side thereof, that is, from the outside toward the weight 1.

The wheel balance weight according to Example No. 3 of the present invention also demonstrated the advantages, not only the handling readiness prior to the assemblage but also the improved workability upon the assemblage.

A wheel balance weight includes a weight, an adhesive seal, a release coated paper, and a protrusion. The protrusion is made of at least a part of the release coated paper, is disposed along a longitudinal direction of the weight, protrudes parallelly to a widthwise direction of the weight beyond one of opposite widthwise ends of the adhesive seal, is located at least around a position, which corresponds to the weight' s center of gravity, and is provided with a cut-off, which is placed at the position corresponding to the weight's center of gravity. The wheel balance weight demonstrates improved workability upon assemblage.

## Claims

1. A wheel balance weight, comprising:
a weight (1) being formed as a substantially strip shape, being made of metal, and having opposite front and rear surfaces;
an adhesive seal (2) being disposed integrally on the rear surface of the weight, and having an adhesive surface to be bonded onto an inner peripheral surface of a wheel's rim;
a release coated paper (3) being disposed detachably on the adhesive surface of the adhesive seal; and
a protrusion (30) being made of at least a part of the release coated paper, being disposed along a longitudinal direction of the weight, protruding parallel to a widthwise direction of the weight beyond one of opposite widthwise ends of the adhesive seal, being located at least around a position, which corresponds to the weight's center of gravity,
**characterized by**
being provided with a cut-off (300), which is placed at the position corresponding to the weight's center of gravity.

2. The wheel balance weight according to claim 1, wherein the protrusion (30) is formed over the entire length of the weight in the longitudinal direction of the weight (1).

3. The wheel balance weight according to claim 1, wherein the protrusion (30) protrudes beyond one of opposite widthwise ends of the weight.

4. The wheel balance weight according to claim 1, further comprising a center-of-gravity indicator (13) for indicating the position of the weight's center of gravity, the center-of-gravity indicator being disposed in the front surface of the weight.

5. The wheel balance weight according to claim 1, wherein the protrusion is provided with the cut-off (300), which is placed at the center of the protrusion (30) in a longitudinal direction of the protrusion.

## Patentansprüche

1. Radausgleichsgewicht, mit:
einem Gewicht (1), das in einer im Wesentlichen Streifenform ausgebildet ist, aus Metall hergestellt ist und entgegengesetzte vordere und hintere Flächen hat;
einer Klebedichtung (2), die einstückig an der hinteren Fläche des Gewichts angeordnet ist und eine klebende Oberfläche hat, um an eine Innenumfangsfläche eines Radkranzes geklebt zu werden;
ein lösbares beschichtetes Papier (3), das lösbar an der Klebefläche der Klebedichtung angeordnet ist; und
ein Vorsprung (30), der aus zumindest einem Teil des lösbaren beschichteten Papiers hergestellt ist, der entlang einer Längsrichtung des Gewichts angeordnet ist, der parallel zu einer Breitenrichtung des Gewichts über eines von der Breite nach gegenüberliegenden Enden der Klebedichtung vorragt, und der sich wenigstens um eine Position herum befindet, die dem Gewichtsschwerpunkt entspricht,
**gekennzeichnet durch** ein Versehen mit einem Ausschnitt (300), der an der Position platziert ist, die dem Gewichtsschwerpunkt entspricht.

2. Radausgleichsgewicht nach Anspruch 1, wobei der Vorsprung (30) über die gesamte Länge des Gewichts in der Längsrichtung des Gewichts (1) ausgebildet ist.

3. Radausgleichsgewicht nach Anspruch 1, wobei der Vorsprung (30) über eines von der Breite nach gegenüberliegenden Enden des Gewichts vorragt.

4. Radausgleichsgewicht nach Anspruch 1, ferner mit einem Schwerpunktsindikator (13) zum Anzeigen der Position des Gewichtsschwerpunkts, wobei der Schwerpunktsindikator in der vorderen Fläche des Gewichts angeordnet ist.

5. Radausgleichsgewicht nach Anspruch 1, wobei der Vorsprung mit dem Ausschnitt (300) versehen ist, welcher an der Mitte des Vorsprungs (30) in einer Längsrichtung des Vorsprungs platziert ist.

## Revendications

1. Masselotte d'équilibrage comprenant :
une masse (1) conformée sensiblement en forme de bande, constituée de métal et présentant des surface avant et arrière opposées ;
un joint adhésif (2) disposé solidairement sur la surface arrière de la masse, et présentant une surface adhésive à coller sur une surface périphérique intérieure d'une jante de roue ;
un papier couché anti-adhésif (3) disposé de manière amovible sur la surface adhésive du joint adhésif ; et
une protubérance (30) constituée d'au moins une partie du papier couché anti-adhésif, disposée le long d'une direction longitudinale de la masse, faisant saillie parallèlement à une direction dans le sens de la largeur de la masse au-delà de l'une des extrémités opposées dans le sens de la largeur du joint adhésif, étant positionnée au moins autour d'une position qui correspond au centre de gravité de la masse,
**caractérisée en ce que** :
elle est pourvue d'une échancrure (300) qui est placée à la position correspondant au centre de gravité de la masse.

2. Masselotte d'équilibrage selon la revendication 1, dans laquelle la protubérance (30) est formée sur la longueur entière de la masse dans la direction longitudinale de la masse (1).

3. Masselotte d'équilibrage selon la revendication 1, dans laquelle la protubérance (30) fait saillie au-delà de l'une des extrémités opposées dans le sens de la largeur de la masse.

4. Masselotte d'équilibrage selon la revendication 1, comprenant en outre un indicateur de centre de gravité (13) destiné à indiquer la position du centre de gravité de la masse, l'indicateur de centre de gravité étant disposé sur la surface avant de la masse.

5. Masselotte d'équilibrage selon la revendication 1, dans laquelle la protubérance est pourvue de l'échancrure (300) qui est placée au centre de la protubérance (30) dans une direction longitudinale de la protubérance.
